(19) Europäisches Patentamt
European Patent Office
Office européen des brevets

(11) EP 1 302 492 B1

(12) EUROPÄISCHE PATENTSCHRIFT

(45) Veröffentlichungstag und Bekanntmachung des Hinweises auf die Patenterteilung:
11.04.2012 Patentblatt 2012/15

(51) Int Cl.:
C08G 18/10 (2006.01)    C08G 18/76 (2006.01)
C08G 18/48 (2006.01)    C08L 75/00 (2006.01)

(21) Anmeldenummer: 02405862.0

(22) Anmeldetag: 07.10.2002

(54) **Mehrkomponenten-Ortschaumsystem und dessen Verwendung**

Multi-component local foaming system and its use

Système moussant local à plusieurs composants et son utilisation

(84) Benannte Vertragsstaaten:
AT BE BG CH CY CZ DE DK EE ES FI FR GB GR IE IT LI LU MC NL PT SE SK TR

(30) Priorität: 15.10.2001 DE 10150737

(43) Veröffentlichungstag der Anmeldung:
16.04.2003 Patentblatt 2003/16

(73) Patentinhaber: HILTI Aktiengesellschaft
9494 Schaan (LI)

(72) Erfinder: Leitner, Michael
86899 Landsberg (DE)

(74) Vertreter: Wildi, Roland et al
Hilti Aktiengesellschaft,
Corporate Intellectual Property
Feldkircherstrasse 100
Postfach 333
9494 Schaan (LI)

(56) Entgegenhaltungen:
WO-A-95/27752    US-A- 4 212 953
US-A- 5 091 436    US-A- 5 344 852

• YNG-LONG LEE ET AL: "EPOXY MODIFIED POLYURETHANE RIGID FOAMS" JOURNAL OF POLYMER SCIENCE, POLYMER CHEMISTRY EDITION, JOHN WILEY AND SONS. NEW YORK, US, Bd. 29, Nr. 8, 1. Juli 1991 (1991-07-01), Seiten 1083-1088, XP000230992 ISSN: 0887-624X
• ZHANG Y ET AL: "RIGID INTERPENETRATING POLYMER NETWORK FOAMS PREPARED FROM A ROSIN-BASED POLYURETHANE AND AN EPOXY RESIN" JOURNAL OF APPLIED POLYMER SCIENCE, JOHN WILEY AND SONS INC. NEW YORK, US, Bd. 69, Nr. 2, 11. Juli 1998 (1998-07-11), Seiten 271-281, XP000802830 ISSN: 0021-8995

Printed by Jouve, 75001 PARIS (FR)

## Beschreibung

Die vorliegende Erfindung betrifft ein Mehrkomponenten-Ortschaumsystem für die Herstellung von Polyurethanschäumen für Bauzwecke vor Ort, mit einer Polyisocyanatkomponente (A) und einer Polyolkomponente (B), die in getrennten Behältern vorliegen, die Verwendung dieses Ortschaumsystems zur Abdichtung von Durchbrüchen und/ oder Durchführungen in Wänden und/oder Decken von Gebäuden und ein Verfahren zur Abdichtung von solchen Durchbrüchen und/oder Durchführungen.

Jedes Gebäude weist Durchbrüche und/oder Durchführungen in den Wänden und/oder Decken auf, durch welche Rohre, Kabel etc. geführt werden. Solche Durchbrüche oder Durchführungen müssen in mechanisch stabiler Weise insbesondere gegen Wasser oder gegen Feuer abgedichtet werden.

Normalerweise wird der Ringspalt der Durchführung eines Rohres oder eines Kabels in der Wand oder Decke eines Gebäudes mechanisch, chemisch oder chemisch/mechanisch abgedichtet. Bei der mechanischen Abdichtung wird der Ringspalt mit Hilfe fester Dichtelemente ausgefüllt, wobei diese mechanischen Elemente durch genauen Formschluß oder durch elastische Verpressung mit dem Untergrund abdichten. Solche mechanischen Abdichteinrichtungen sind teuer, zeit- und arbeitsaufwendig in der Anordnung und sind aufgrund der notwendigen passgenauen Dichtelemente auf bestimmte Rohr-, Kabel- und Bohrungsdurchmesser beschränkt.

Bei der chemischen Abdichtung wird die Öffnung mit einem reaktiven System ausgefüllt, welches aushärtet und die Durchführung verschließt. Hierzu können anorganische Systeme, beispielsweise Mörtel, oder organische Systeme, beispielsweise Dichtmassen, Polymerschäume etc., eingesetzt werden. Es ist weiterhin möglich, eine solche chemische Abdichtung mit einer mechanischen Abdichtung zu kombinieren durch Anordnung einer mechanischen Verschalung, die das chemische Abdichtmaterial aufnimmt.

Die chemische Abdichtung durch Ausfüllen der Öffnung mit Dichtmassen, Schäumen oder Mörtel besitzt nicht die Nachteile der mechanischen Systeme, gewährleistet jedoch häufig keine dauerhafte Abdichtung gegen eintretendes Wasser oder gegen Feuer. Im Fall der Anwendung eines Schaumsystems, vor allem im Bereich von Brandschutzabdichtungen, ist es notwendig, funktionelle Additive, wie beispielsweise Blähgraphit oder Ammoniumpolyphosphat, zu den Ausgangsmaterialien zuzugeben, um die angestrebten Eigenschaften des Schaumes zu erreichen. Solche Schäume weisen aber aufgrund der erforderlichen Mischtechnik (Blend-Technik) bei der Vereinigung der Ausgangsmaterialien eine relativ schlechte mechanische Belastbarkeit auf, da die beigefügten Additive nicht kovalent in die Schaummatrix eingebunden sind, sondern in Form von getrennten Domänen in der Polymermatrix vorliegen. Daher verlieren diese Schaumsysteme auch bezüglich ihrer spezifischen Funktion relativ schnell ihre Wirksamkeit dadurch, daß sich das System Schaummatrix/Additiv mit der Zeit durch Aggregation, Diffusion oder Oxidation des Additivs signifikant verändert.

Interpenetrierende polymere Netzwerke und deren Herstellung sind bekannt, wozu auf Römpp, Lexikon Chemie, 10. Auflage (1997), Seite 1945 verwiesen werden kann. Die Herstellung solcher Netzwerke kann in unterschiedlicher Weise erfolgen, beispielsweise durch die gleichzeitige Polymerisation von zwei oder mehr unterschiedlichen Monomeren in Anwesenheit von Vernetzern, wobei die Polymerisationsreaktion für jedes der eingesetzten Monomere spezifisch sein muß, indem beispielsweise das erste Monomer mit Hilfe des ersten Vernetzers ein polymeres Netzwerk bildet, in den das zweite Monomer nicht oder kaum kovalent eingebaut wird. Das zweite Monomer bildet dann mit Hilfe des zweiten Vernetzers ein polymeres zweites Netzwerk, in welches das erste Monomere nicht oder kaum kovalent eingebunden ist. In Abhängigkeit von der Anzahl der unterschiedlichen Monomeren und der unterschiedlichen Polymerisationsarten können mehrere Netzwerke ineinander verschränkt werden.

Die wesentliche Eigenschaft solcher interpenetrierender polymerer Netzwerke ist darin zu sehen, daß die gebildeten Polymernetzwerke gegenseitig durchdrungen sind, wobei keine oder nur wenige chemische Bindungen zwischen den unterschiedlichen Netzwerken bestehen. Wegen der gegenseitigen Durchdringung und ihrer Vernetzung können sich die interpenetrierenden polymeren System nicht mehr entmischen, wodurch sich eine besonders hohe mechanische Stabilität solcher Systeme ergibt.

Aus der EP-A-0 230 666 ist eine härtbare Einkomponentenklebemasse auf der Grundlage eines interpenetrierenden Urethan/Epoxy/Silikonpolymer-Netzwerkes bekannt.

Die EP-B-0 753 020 offenbart ein in Wasser dispergierbares interpenetrierendes polymeres Netzwerk auf der Grundlage eines in Wasser dispergierbaren thermoplastischen Polymeren auf der Basis eines voll umgesetzten Isocyanats enthaltend Urethan- und/oder Harnstoffverbindungen und eines interpenetrierenden Additionspolymers auf der Grundlage eines ethylenisch ungesättigten Monomeren.

Die US-Patentschrift 4,923,934 beschreibt interpenetrierende polymere Netzwerke auf der Grundlage eines blockierten Urethanpräpolymers, eines Polyols, eines Epoxidharzes und eines Anhydrids als Katalysator für das Epoxidharz, welche interpenetrierende Polymere als Beschichtungsmassen eingesetzt werden.

Aus der US-Patent 4,212,953 sind feuerbeständige Polyurethanschaummassen in Form eines interpenetrierenden Netzwerks aus einem Urethanpolymer und einem phosphorhaltigen Polymer bekannt, welch letzteres aufgrund der seitenständigen Phosphorgruppen die erforderlichen Flammschutzeigenschaften vermittelt.

Die Aufgabe der vorliegenden Erfindung besteht nun darin, die oben genannten Probleme der Abdichtung von Durchbrüchen und/oder Durchführungen in Wänden und/oder Decken von Gebäuden zu lösen und ein wasserabdichtendes und/oder feuerabdichtendes Schaumsystem anzugeben, welches nicht nur kostengünstiger als die konventionellen mechanischen Lösungen ist, sondern vor Ort, also beispielsweise auf Baustellen, schnell und einfach angewandt werden kann und seine Eigenschaften auch während langer Zeit vor und nach Gebrauch beibehält.

Es hat sich nunmehr überraschenderweise gezeigt, daß diese Aufgabe mit Hilfe eines Mehrkomponenten-Ortschaumsystems für die Herstellung von Polyurethanschäumen gelöst werden kann, welches vor Ort aufgeschäumt werden kann und aus einem interpenetrierendes Netzwerk aus geschäumtem Polyurethan und mindestens einem weiteren Polymer gebildet ist, wobei über das oder die weiteren Polymere die gewünschten Eigenschaften des Schaums gezielt beeinflußt werden können und zwar in der Weise, daß das diese Eigenschaften vermittelnde weitere Polymer Teil des interpenetrierenden Netzwerks ist und weder ausschwitzen, aggregieren noch herausgelöst werden kann.

Diese Aufgabe wird gelöst durch das Mehrkomponenten-Ortschaumsystem nach Anspruch 1 oder 2, welches beim Vermischen ein interpenetrierendes polymeres Netzwerk aus geschäumtem Polyurethan und mindestens einem weiteren Polymer bildet. Die Unteransprüche betreffen weitere Ausführungsformen dieses Erfindungsgegenatanden sowie die Verwendung dieses Mehrkomponenten-Ortschaumsystems zur Abdichtung von Durchbrüchen und/oder Durchführungen in Wänden und/oder Decken von Gebäuden und ein Verfahren zur Abdichtung von solchen Durchbrüchen und/oder Durchführungen.

Gegenstand der Erfindung ist daher ein Mehrkomponenten-Ortschaumsystem für die Herstellung von Polyurethanschäumen für Bauzwecke vor Ort. mit einer Polyisocyanatkomponente (A) und einer Polyolkomponente (B), die In getrennten Behältern vorliegen, und das dadurch gekennzeichnet ist, daß neben der Polyisocyanatkomponente (A) und der Polyolkomponente (B) weitere Komponenten (C) und (D) in räumlich getrennter Form enthalten sind, welche Komponenten beim Vermischen ein interpenetrierendes Netzwerk aus geschäumtem Polyurethan und mindestens einem weiteren Polymer binden.

Gemäß einer ersten Ausführungsform der Erfindung sind die Bestandteile der Komponenten (C) und (D) derart in den Behältern für die Polyisocyanatkomponente (A) und die Polyolkomponente (B) enthalten, daß ihre Reaktion unter Bildung des ausgeschäumten interpenetrierenden Netzwerks erst nach dem Vermischen der Behälterinhalte erfolgt. Es muß also dafür Sorge getragen werden, daß die in den jeweiligen Behältern vorhandenen Komponenten nicht vorzeitig miteinander reagieren, sondern daß die Reaktion erst dann von selbst In Gang kommt, wenn die Komponenten (A) und (B) mit den darin enthaltenen Bestandteilen vermischt werden. Alternativ kann die Komponente (C) in einem weiteren getrennten Behälter vorliegen.

In dieser Weise wird sichergestellt, daß das erfindungsgemäße Mehrkomponenten-Ortschaumsystem die erforderliche Lagerbeständigkeit vor dem bestimmungsgemäßen Gebrauch besitzt.

Bei dem erfindungsgemäßen Ortschaumsystem dienen die verschiedenen Komponenten (A) bis (D) dazu, dem letztendlich durch Vermischen dieser Komponenten und deren Reaktion unter Aufschäumen und Aushärtung gebildeten interpenetrierenden polymeren Netzwerk in Form eines Schaums die gewünschten Eigenschaften zu verleihen. So dienen die Polyisocyanatkomponente (A) und Polyolkomponente (B) zur Bildung eines festen Polyurethanschaums, dessen Eigenschaften durch die Anwesenheit der Komponenten (C) oder (D) in der gewünschten Weise verändert werden können. Zwar ist die Anwendung von Polyurethanschäumen in Ortschaumsystemen für Bauzwecke seit langem bekannt. Hierbei wird die Polyisocyanat/Wasser-Reaktion ausgenützt, bei der Kohlendioxid gebildet wird, welches das gebildete Polyurethan aufschäumt. Die hierbei resultierenden Polyurethanschäume besitzen jedoch für sich betrachtet weder gute Wasserabdichtungseigenschaften noch zufriedenstellende Brandschutzeigenschaften. Da das Einmischen von Additiven zur Verbesserung dieser Eigenschaften, wie oben ausgeführt worden ist, nicht zum Ziel führt, lehrt die vorliegenden Erfindung die Kombination des Polyurethannetzwerks mit einem weiteren polymeren Netz, welches aus den Komponenten (C) und (D) gebildet wird und welches dazu dient, dem Polyurethanschaum die gewünschten mechanischen, Wasserdichtigkeits- und Brandschutzeigenschaften zu verleihen. So kann erfindungsgemäß durch gezielte Auswahl der Komponenten (C) und (D) die Wasserbeständigkeit des Polyurethanschaumstoffes und/oder dessen Brandfestigkeit in der gewünschten Weise verbessert werden, indem aus dem beanspruchten Mehrkomponenten-Ortschaumsystem ein interpenetrierendes polymeres Netzwerk gebildet wird, welches eine sehr gute Haftung an dem umgebenden Wandmaterial ergibt und damit das Eindringen von Wasser verhindert, beziehungsweise welches im Brandfall trotz hoher Umgebungstemperaturen und oxidativer Atmosphäre eine mechanisch stabile Brandkruste bildet, die dem Feuer den notwendigen Widerstand bietet.

Durch das Einbringen dieser die Eigenschaften des Polyurethanschaums in gezielter Weise verbessernden "Additive" in Form eines interpenetrierenden Netzwerkes ergeben sich ganz ausgezeichnete mechanische und physikalischchemische Eigenschaften des ausgehärteten Polyurethanschaums. wobei keinerlei Entmischung der interpenetrierenden Bestandteile des Schaumsystems erfolgen kann und damit dessen Eigenschaften auch während langer Zeit aufrechterhalten bleiben.

Vorzugsweise enthält das erfindungsgemäße Ortschaumsystem als Polyisocyanatkomponente (A) mindestens ein Polyisocyanat mit einem NCO-Gehalt von 5 bis 55%, vorzugsweise 20 bis 50%, und einer durchschnittlichen Anzahl von 2 bis 5. vorzugsweise 2 bis 4 NCO-Gruppen pro Molekül. Besonders bevorzugt ist ein Polyisocyanat auf der Grundlage von Methylendiphenyldiisocyanat und/oder polymeren Homologen davon, insbesondere ein solches mit einem NCO-Gehalt von 31% und durchschnittlich 2,7 NCO-Gruppen pro Molekül.

Die Polyolkomponente (B) umfaßt mindestens ein Polyol mit einer OH-Zahl von 30 bis 1000, vorzugsweise von 500 bis 1000, und einer durchschnittlichen OH-Funktionalität pro Molekül von 2 bis 7, vorzugsweise 2 bis 4. Besonders bevorzugt sind Polyetherpolyole und/oder Polyesterpolyole mit einer OH-Zahl von 300 bis 1000, vorzugsweise von 500 bis 1000, und den oben angegebenen OH-Funktionalitäten, sowie Aminopolyetherpolyole und/oder Polyole auf der Grundlage von Phosphorsäureestern mit einer OH-Zahl von 30 bis 1000. vorzugsweise 100 bis 300 und einer durchschnittlichen OH-Funktionalität pro Molekül von 2 bis 7, vorzugsweise von 3 bis 5. Weiterhin sind besonders bevorzugt halogenierte Polyole mit einer OH-Zahl von 30 bis 1000, vorzugsweise von 100 bis 300, und einer durchschnittlichen OH-Funktionalität pro Molekül von 1.5 bis 5. vorzugsweise von 2 bis 4.

Als Komponente (C) ist in dem erfindungsgemäßen Ortschaumsystem ein Epoxidharz und/oder Siloxanpräpolymer enthalten. Das Epoxidharz dient zur Verbesserung der Wasserdichtigkeit des Polyurethan-schaums, während das Siloxanpräpolymer nach entsprechender Vernetzung dem interpenetrierenden polymeren Netzwerk eine erhöhte Feuerbeständigkeit verleiht.

Bei dem Epoxidharz handelt es sich vorzugsweise um ein solches mit einem Epoxy-Äquivalentgewicht von 100 bis 500 g/Mol, vorzugsweise 150 bis 200 g/ Mol, wobei Epoxidharze auf der Grundlage von Bisphenol A und Bisphenol F, insbesondere aus 70% Bisphenol A und 30% Bisphenol F. bevorzugt sind. Das Epoxidharz kann auch halogeniert, Insbesondere bromiert sein.

Das Epoxidharz ist als Komponente (C) vorzugsweise in einer Menge von 10 bis 50 Gew.-%, bevorzugter 15 bis 35 Gew.-% bezogen auf das Gewicht des gesamten Ortschaumsystems enthalten.

Vorzugsweise umfaßt die Komponente (C) als Siloxanpräpolymer ein Siloxanpräpolymer mit einer mittleren Molmasse von 200 g/Mol bis 10,000 g/Mol, vorzugsweise 400 g/Mol bis 3.000 g/Mol, und 2 bis 4, vorzugsweise 2 bis 3 reaktiven Endgruppen, insbesondere niedrigmolekularen Alkoxy- und Alkylester-Endgruppen, vorzugsweise Methoxyendgruppen.

Vorzugweise liegt die Kennzahl der Polyurethanreaktion im Bereich von 95 bis 165, vorzugsweise im Bereich von 102 bis 120.

Unter der Kennzahl der Polyurethanreaktion versteht man das prozentuale Verhältnis der eingesetzten Isocyanatgruppen (Stoffmenge der effektiv eingesetzten Isocyanatgruppen: $n_{NCO}$) zu den eingesetzten aktiven H-Funktionen (Stoffmenge der effektiv eingesetzten aktiven H-Funktionen: $n_{aktiveH}$), die beispielsweise von OH-Gruppen von Polyolen, von $NH_2$-Gruppen von Aminen oder von COOH-Gruppen von Carbonsäuren geliefert werden. Eine äquivalente Menge Isocyanat entspricht der Kennzahl 100, ein 10%iger Überschuß an Isocyanatgruppen entspricht der Kennzahl 110. Die zur Berechnung der Kennzahl notwendige Formel lautet:

$$Kennzahl = \frac{n_{NCO} \cdot 100}{n_H}$$

Als weitere Bestandteile enthält die Polyolkomponente (B) Wasser, welches als Mittel zum Aufschäumen des Polyurethanschaums dient, in einer Menge, die einen Polyurethanschaum mit einer Schaumdichte von 0.05 bis 0,5 g/em³. vorzugsweise von 0.2 bis 0.4 g/cm³ ergibt, einen oder mehrere Katalysatoren für die Polyurethanbildungsreaktion, die Komponente (D) für die Bildung des oder der weiteren Polymeren und gegebenenfalls einen Schaumzellenstabilisator.

Als Katalysatoren für die Polyurethanbildungsreaktion kann in der Polyolkomponente (B) vorzugsweise ein oder mehrere tertiäre Amine enthalten sein, insbesondere Dimorpholindiethylether.

Die Polyolkomponente (B) des erfindungsgemäßen Mehrkomponenten-Ortschaumsystems enthält als Komponente (D) für die Bildung des weiteren Polymeren auf der Grundlage eines Epoxidharzes einen üblichen Katalysator für die Polymerisation des Epoxidharzes, vorzugsweise eine LewisSäure, bevorzugter ein Phenol und Insbesondere 2,4,6-Tris(dimethylaminomethyl)-phenol.

Gemäß einer weiteren Ausführungsform enthält die Polyolkomponente (B) als Komponente (D) für die Bildung des weiteren Polymeren auf der Grundlage eines Siloxanpräpolymers ein übliches Vernetzungsmittel für das Siloxanpräpolymer, vorzugsweise ein Organooxysilan mit mindestens drei Niedrigalkoxyendgruppen, vorzugsweise Methoxyendgruppen pro Molekül und beispielsweise einem mittleren Molgewicht im Bereich von 100 bis 1.000 g/Mol.

Als Schaumzellenstabilisator kann in der Polyolkomponente (B) beispielsweise ein bekanntes Mittel zur Stabilisierung der Zeilbildung während der Schaumreaktion vorhanden sein, insbesondere ein Polysiloxan.

Das erfindungsgemäße Mehrkomponenten-Ortschaumsystem kann gegebenenfalls an sich bekannte und übliche Füllstoffe, Hilfsstoffe und/oder Additive in üblichen Mengen enthalten, wobei diese üblichen Zusätze in den Komponenten (A), (B), (C) und/oder (D) enthalten sind. Als solche Zusätze sind vorzugsweise 0 bis 40 Gew.-%. bevorzugter 1 bis 20 Gew.-% Füllstoffe, wie Sand. Kreide, Perlite, Ruß oder Mischungen davon, 0 bis 2 Gew.-%, vorzugsweise 0.1 bis 1 Gew.-% eines oder mehrerer Farbstoffe oder Pigmente und/ oder 0 bis 40 Gew.-%, vorzugsweise 1 bis 20 Gew.-% brandhemmender Additive, wie beispielsweise halogenhaltige Brandschutzmittel, wie Tris(2-Chlorisopropyl)-phosphat, ablative Brandschutzmittel, wie beispielsweise Aluminiumhydroxid, krustenbildende Brandschutzmittel, wie beispielsweise Ammoniumpolyphosphat und bei Temperaturerhöhung expandierende Stoffe, wie beispielsweise Blähgraphit, enthalten, wobei Mengen dieser Zusätze jeweils auf das Gesamtgewicht des Ortschaumsystems bezogen sind.

Gemäß einer weiteren bevorzugten Ausführungsform liegt das erfindungsgemäße Mehrkomponenten-Ortschaumsystem in Behältern vor, die über Zuführungsleitungen mit einer Abgabeeinrichtung mit Mischkopf verbunden sind, in dem die Komponenten vermischt werden. Beispielsweise weist die Abgabeeinrichtung einen Mischkopf in Form eines Mundstücks mit einem statischen Mischer auf.

Diese Behälter können weiterhin mit Auspreßeinrichtungen versehen sein. über welche die Komponenten (A) bis (D) in in den Mischkopf der Ausgabeeinrichtung ausgebracht werden können, beispielsweise mechanische Preßeinrichtungen und/oder Treibgase, die in den Komponenten (A) bis (D) und/oder in der Druckkammer einer Zweikammerkartusche enthalten sind. Solche Treibgase sind vorzugsweise innerte, verdichtete oder verflüssigte Gase, beispielsweise Stickstoff oder Fluorkohlenwasserstoffe, wie 1,1,1,2-Tetrafluorethan (Treibmittel 134a) oder 1,1,1,2,3,3,3-Heptafluorpropan (Treibmittel 227) aber auch Kohlenwasserstoffe, wie Butan. Propan oder Mischungen davon.

Ein weiterer Gegenstand der Erfindung ist die Verwendung des Mehrkomponenten-Ortschaumsystems der oben beschriebenen Art zur Abdichtung von Durchbrüchen und/oder Durchführungen in Wänden und/oder Decken von Gebäuden, beziehungsweise ein Verfahren zur Abdichtung solcher Durchbrüche und Durchführungen, welches darin besteht, daß man das erfindungsgemäße Mehrkomponenten-Ortschaumsystem mit Hilfe der Abgabeeinrichtung mit Mischkopf, in dem die Komponenten vermischt werden, in den Durchbruch und/oder die Durchführung einbringt und aufschäumen und aushärten läßt.

Es hat sich überraschenderweise gezeigt, daß die erfindungsgemäß aufgebauten Mehrkomponenten-Ortschaumsysteme sich im Gegensatz zu den aus der Stand der Technik bekannten interpenetrierenden polymeren Netzwerke nicht unter den üblichen industriellen Bedingungen mit einer hohen Prozeßkontrolle und für die Schaumsynthese optimierten Bedingungen zu Polyurethanschäumen mit den gewünschten Eigenschaften aufschäumen und aushärten lassen, sondern auch unter den schwierigen Verhältnissen einer Baustelle, das heißt unterschiedlichen Anwendungstemperaturen im Bereich von 0 bis 40°C. den sehr inhomogenen zu verfüllenden Volumina und den unterschiedlichsten Umgebungsmaterialien des Schaumes, nämlich Beton, Stein, Stahl, Rohren aus Kunststoffen, wie Polyethylen, Polyvinylchlorid oder auch Kupfer.

Dabei läßt sich das erfindungsgemäße Mehrkomponenten-Ortschaumsystem in sehr einfacher und schneller Weise mittels einer Kartuschentechnik unter Anwendung einer mechanischen Auspreßeinrichtung oder mit Hilfe einer Sprühpistole bei Einsatz von Behältern in Form von Zweikammerkartuschen mit Druckkammer ausbringen und anwenden.

Die folgenden Beispiele dienen der weiteren Erläuterung der Erfindung.

## BEISPIEL 1

Mehrkomponenten-Ortschaumsystem zur Erzeugung eines wasserdichten interpenetrierenden polymeren Netzwerks aus Polyurethanschaum und Epoxidharz.

Zur Herstellung des erfindungsgemäßen Mehrkomponenten-Ortschaumsystem wurden die in der nachfolgenden Tabelle 1 angegebenen Bestandteile eingesetzt:

**Tabelle 1**

| Bestandteil | Beschreibung | Kennwert | Masse |
|---|---|---|---|
| Polyisocyanat | Basierend auf Methylendiphenyldiisocyanat (MDI) und polymere Homologe des MDI | NCO-Gehalt: 31%, durchschnittliche Anzahl an NCO-Gruppen pro Molekül: 2,7 | 63 g |
| Polyol 1 | Polyetherpolyol basierend auf Trimethylolpropan (TMP) | OH-Zahl: 860, durchschnittliche Anzahl an OH-Gruppen pro Molekül: 3 | 16 g |
| Polyol 2 | Aminopolyetherpolyol | OH-Zahl: 480, durchschnittliche Anzahl an OH-Gruppen pro Molekül: 4 | 16 g |
| Epoxidharz | Zu 70% auf Bisphenol A und zu 30% auf Bisphenol F basierend | Epoxy-Aquivalentgewicht: 175 g/Mol | 45 g |
| Wasser | | OH-Zahl: 6240 | 0,4 g |
| Katalysator 1 | Dimorpholindiethylether | | 0,6 g |
| Katalysator 2 | 2,4,6-Tris (dimethylaminomethyl)-phenol | | 0,5 g |

(fortgesetzt)

| Bestandteil | Beschreibung | Kennwert | Masse |
|---|---|---|---|
| Schaumzellenstabilisator | Polysiloxan | | 3 g |

Die in der obigen Tabelle 1 angeführte Rezeptur bezieht sich auf eine Gesamtmasse des Ansatzes von 144,5 g, wobei sich aufgrund der Polyurethan-Stöchiometrie eine Kennzahl von 110 für den Polyurethan-Anteil des Schaumes ergibt.

Durch Vermischen des Epoxidharzes mit dem Polyisocyanat wird die Komponente (A) gebildet. Die Komponente (B) wird durch Vermischen der Polyole 1 und 2, des Wassers, der Katalysatoren 1 und 2 und des Schaumzellenstabilisators hergestellt.

Beide Komponenten (A) und (B) werden in getrennte Behälter eingebracht in Form von zwei Kartuschen, welche über Zuführungsleitungen mit einer Abgabeeinrichtung mit Mischkopf verbunden sind, in dem die Komponenten (A) und (B) vermischt werden. Zur Anwendung des erfindungsgemäßen Ortschaumsystems werden die Bestandteile der beiden Behälter mit Hilfe eines Auspreßgerätes aus den Kartuschen für das Mundstück ausgepreßt und in die auszufüllende Öffnung eingebracht.

Nach dem Vermischen der beiden Komponenten laufen maßgeblich drei chemische Reaktionen ab, nämlich die Polyurethanbildung, die Polymerisation des Epoxidharzes und die Schäumreaktion.

Dabei wird durch Reaktion des Polyisocyanats mit dem Polyol 1 und dem Polyol 2 in Gegenwart des Katalysators 1 das Polyurethan-Netzwerk gebildet, welches durch Reaktion des Polyisocyanats mit dem vorhandenen Wasser unter Bildung von Kohlendioxid aufgeschäumt wird. Das Epoxidharz, welches in Gegenwart des Katalysators 2 ausgehärtet wird, liefert die für die Funktion des Polyurethanschaums notwendigen Eigenschaften, nämlich eine hohe Hydrophobie und eine gute Haftung an Beton und Stein.

Die Dichte dieses nach etwa 5 Minuten bei 20°C ausgehärteten Polyurethanschaums beträgt 0,30 g/cm$^3$.

Der nach dem Aufschäumen und Aushärten erhaltene Polyurethanschaum besitzt eine überraschend hohe Wasserdichtigkeit im Vergleich zu einem in analoger Weise hergestellten Schaum ohne interpenetrierendes Epoxidharz-Netzwerk, indem bei den nachfolgend beschriebenen Testbedingungen einem Wasserdruck von 6 bar während zwei Stunden standhält ohne undicht zu werden, während der Vergleichsschaum bereits nach 20 Minuten bei einem Wasserdruck von 1 bar undicht wurde.

Zur Überprüfung der Wasserdichtigkeit wird in einem Betonblock mit einer Höhe von 1 m, einer Breite von 50 cm und einer Dicke von 50 cm in der Mitte ein Loch mit einem Durchmesser von 10 cm und einer Tiefe von 50 cm gebohrt. Durch Abstandshalter aus Schaumstoff wird ein 1 m langes Rohr aus Polyethylen mit einem Durchmesser von 5 cm derart in dem gebohrten Loch zentriert, daß die eine Seite des Loches mit einem Schaum zu einer Tiefe von 20 cm verfüllt werden kann. Dann wird das erfindungsgemäße Ortschaumsystem der obigen Zusammensetzung in das Bohrloch eingebracht, worauf nach dem Aushärten über Nacht das über das Bohrloch hinausragende Schaummaterial abgesägt wird. Anschließend wird die Betonanordnung mit dem eingeschäumten Material in eine Prüfapparatur eingespannt, in der die ausgeschäumte Seite des Betonloches direkt mit Wasser in Kontakt steht, welches über eine Druckgasleitung mit einem Gasdruck von maximal 6 bar beaufschlagt werden kann. Diese unter Wasserdruck stehende Seite des Betons ist abgedichtet, wobei der effektive Druck mit Hilfe eines Manometers laufend abgelesen werden kann. Auf der anderen Seite des Betonblockes kann der Wasserdurchtritt optisch oder mit Hilfe eines Feuchtigkeitssensors nachgewiesen werden. Die Prüfung verläuft so, daß beginnend mit einem Druck von 1 bar stets zwei Stunden gewartet wird, ob der Schaum undicht wird oder nicht. Nach erfolgter Dichtigkeit wird der Druck um 1 bar erhöht und es wird wieder zwei Stunden gewartet. Diese Maßnahmen werden so lange wiederholt, bis der Schaum undicht wird oder bis der Grenzdruck von 6 bar während zwei Stunden erfolgreich von dem Schaum ohne Undichtigkeit ausgehalten wird.

Zum Nachweis des interpenetrierenden Charakters der Polymeren des mit Hilfe des erfindungsgemäßen Ortschaumsystems erhaltenen Schaums wurde die Glasübergangstemperatur ($T_g$) des erhaltenen interpenetrierenden Schaumsystems und die der getrennt polymerisierten Bestandteile mittels differentieller Abtastkalorimetrie (DSC) gemessen. Die Glasübergangstemperatur eines Polymers ist die Temperatur, mit der das Polymer vom glasartigen in den fluiden Zustand wechselt, das heißt bei der ein signifikanter Viskositätsabfall des Polymers zu beobachten ist. Bei phasengetrennten Polymersystemen, die aus zwei unterschiedlichen Polymeren aufgebaut sind, lassen sich zwei unterschiedliche Glasübergangstemperatur-Stufen mit Hilfe der differentiellen Abtastkalortmetrie bestimmen, sofern die Glasübergangstemperaturen der beiden einzelnen Polymere genügend weit auseinander liegen.

Beispielsweise zeigt eine Mischung aus Polystyrol und Polybutadien, die phasengetrennt in einer Mischung vorliegen, sowohl die Glasübergangstemperatur von Polystyrol 100°C) als auch die von Polybutadien (-70°C).

Liegen aber die beiden unterschiedlichen Polymere als interpenetrierendes Netzwerk vor, zeigt sich bei der differentiellen Abtastkalorimetrie nur eine einzige Glasübergangstemperatur, die zwischen den Glasübergangstemperaturen der beiden Polymeren liegt, die das interpenetrierende polymere Netzwerk bilden.

Der aus dem obigen Ortschaumsystem gebildete Polyurethan/Epoxidschaum zeigt bei der differentiellen Abtastkalorimetrie eine Glasübergangstemperatur von 120°C. Ein ausschließlich aus dem Epoxidharz aufgebautes Polymer besitzt eine Glasübergangstemperatur von 100°C, während der ausschließlich aus dem Polyurethan aufgebaute Schaum eine Glasübergangstemperatur von 150°C aufweist. Damit ist aber ersichtlich, daß sich bei der bestimmungsgemäßen Umsetzung und Aushärtung des erfindungsgemäßen Ortschaumsystems ein interpenetrierendes polymeres Netzwerk aus den beiden Bestandteilen Polyurethan und Epoxidharz gebildet hat.

**BEISPIEL 2** (nicht erfindungsgemäß)

Mehrkomponenten-Ortschaumsystem zur Erzeugung eines Brandschutzschaums aus einem interpenetrierenden polymeren Netzwerk aus Polyurethan, Epoxidharz und einem vernetzten Siloxanpräpolymer
Für die Herstellung dieses Mehrkompenenten-Ortschaumsystems wurden die in der nachfolgenden Tabelle 2 angegebenen Bestandteile eingesetzt:

**Tabelle 2**

| Bestandteil | Beschreibung | Kennwert | Masse |
|---|---|---|---|
| Polyisocyanat | Basierend auf Methylendiphenyldiisocyanat (MDI) und polymere Homologe des MDI | NCO-Gehalt: 31%, NCO-Gruppen pro Molekül: 2,7 | 69 g |
| Polyol 1 | Polyetherpolyol basierend auf Trimethylolpropan (TMP) | OH-Zahl: 860, OH-Gruppen pro Molekül: 3 | 20 g |
| Polyol 2 | Polyesterpolyol basierend auf Terephthalsäure | OH-Zahl: 185, OH-Gruppen pro Molekül: 2 | 19 g |
| Polyol 3 | Polyol basierend auf Phosphorsäureester | OH-Zahl: 130, OH-Gruppen pro Molekül: 2 | 18 g |
| Epoxidharz | Basierend zu 70% auf Bisphenol A und zu 30% auf Bisphenol F | Epoxy-Aquivalentgewicht: 175 g/Mol | 28 g |
| Siloxanpräpolymer | Siloxan mit zwei Methoxyendgruppen | Mittleres Molgewicht im Bereich von 2.000 g/Mol | 28 g |
| Vernetzungsmittel | Silan mit drei Methoxyendgruppen | Mittleres Molgewicht im Bereich von 300 g/Mol | 4 g |
| Wasser | | OH-Zahl: 6240 | 0,5 g |
| Katalysator 1 | Dimorpholindiethylether | | 0,5 g |
| Katalysator 2 | 2,4,6-Tris (dimethylaminomethyl)-phenol | | 1,0 g |
| Schaumzellenstabilisator | Polysiloxan | | 3,0 g |

Die obigen Bestandteile beziehen sich auf eine Gesamtmasse von 191 g. Gemäß der Polyurethan-Stöchiometrie errechnet sich eine Kennzahl von 110 für den Polyurethan-Anteil des Schaums.
Von den obigen Bestandteilen dienen das Polyisocyanat und die Polyole 1, 2 und 3 zusammen mit dem Wasser und dem Katalysator 1 zur Bildung des Polyurethanschaums. Das Epoxidharz wird mit Hilfe des Katalysators 2 in Form eines interpenetrierenden Netzwerkes ausgehärtet. Die Methoxyendgruppen des Siloxanpräpolymers und des Vernetzungsmittels müssen erst mit Wasser unter Hydrolyse zu Silanolgruppen umgesetzt werden, bevor die eigentliche Vernetzungsreaktion, die Kondensation der Silanolgruppen, stattfinden kann. Auf diese Weise entsteht das dritte interpenetrierende Polymer.
Von den obigen Bestandteilen werden das Polyisocyanat mit dem Epoxidharz und dem Siloxanpräpolymer und dem Vernetzer unter Bildung der Komponente (A) vermischt. Die übrigen Bestandteile liefern durch Vermischen die Komponente (B).
Diese Komponenten werden in der in Beispiel 1 beschriebenen Weise in getrennte Behälter eingebracht und bei der bestimmungsgemäßen Verwendung über Zuführungsleitung einer Abgabeeinrichtung mit Mischkopf zugeführt, von wo aus die aufschäumende und aushärtende Mischung in die abzudichtende Öffnung eingeführt wird.
Die Dichte des nach etwa 5 Minuten bei 20°C ausgehärteten Polyurethanschaums beträgt 0,24 g/cm$^3$.

Der in dieser Weise hergestellte interpenetrierende Polyurethanschaum mit einem Netzwerk aus Polyurethan, ausgehärtetem Epoxidharz und vernetztem Siloxanpolymer besitzt eine Glasübergangstemperatur von 80°C. Da der ausschließlich aus Polyurethan aufgebaute Schaum eine Glasübergangstemperatur von 110°C besitzt und die Epoxidharzpolymere beziehungsweise das vernetzte Siloxanpolymer Glasübergangstemperaturen von 70°C aufweisen, ist davon auszugehen, daß bei dem bestimmungsgemäßen Aufschäumen und Aushärten des erfindungsgemäßen Ortschaumsystems ein interpenetrierendes polymeres Netzwerk aus den drei polymeren Bestandteilen gebildet wird.

Aufgrund der Anwesenheit des vernetzten Siloxanpolymers zeigt der Schaum ausgezeichnete Brandfestigkeitseigenschaften in Form eines relativ hohen Restaschegehalts nach dem Tempern des Schaums bei einer hohen Temperatur von 800°C und einer guten mechanischen Stabilität der Aschekruste, die sich während des Aufheizens und Temperns bei dieser hohen Temperatur bildet.

**Patentansprüche**

1. Mehrkomponenten-Ortschaumsystem für die Herstellung von Polyurethanschäumen für Bauzwecke vor Ort, mit einer Polyisocyanatkomponente (A) und einer Polyolkomponente (B), die in getrennten Behältern vorliegen, und das neben der Polyisocyanatkomponente (A) und der Polyolkomponente (B) weitere Komponenten (C) und (D) in räumlich getrennter Form enthält, welche Komponenten beim Vermischen ein interpenetrierendes polymeres Netzwerk aus geschäumtem Polyurethan und mindestens einem weiteren Polymer bilden, **dadurch gekennzeichnet, dass** als Komponente (C) ein Epoxidharz und/oder Siloxanpräpolymer enthalten ist und die Polyolkomponente (B) als Komponente (D) für die Bildung des weiteren Polymeren auf der Grundlage eines Epoxidharzes einen üblichen Katalysator für die Polymerisation des Epoxidharzes oder für die Bildung des weiteren Polymeren auf der Grundlage eines Siloxanpräpolymers ein übliches Vernetzungsmittel für das Siloxanpräpolymer enthält, wobei die Bestandteile der Komponenten (C) und (D) derart in den Behältern für die Polyisocyanatkomponente (A) und die Polyolkomponente (B) enthalten sind, dass ihre Reaktion erst nach dem Vermischen der Behälterinhalte erfolgt.

2. Mehrkomponenten-Ortschaumsystem für die Herstellung von Polyurethanschäumen für Bauzwecke vor Ort, mit einer Polyisocyanatkomponente (A) und einer Polyolkomponente (B), die In getrennten Behältern vorliegen, und das neben der Polyisocyanatkomponente (A) und der Polyolkomponente (B) weitere Komponenten (C) und (D) in räumlich getrennter Form enthält, welche Komponenten beim Vermischen ein interpenetrierendes polymeres Netzwerk aus geschäumtem Polyurethan und mindestens einem weiteren Polymer bilden, **dadurch gekennzeichnet, dass** als Komponente (C) ein Epoxidharz und/oder Siloxanpräpolymer enthalten ist und die Polyolkomponente (B) als Komponente (D) für die Bildung des weiteren Polymeren auf der Grundlage eines Epoxidharzes einen üblichen Katalysator für die Polymerisation des Epoxidharzes oder für die Bildung des weiteren Polymeren auf der Grundlage eines Siloxanpräpolymers ein übliches Vernetzungsmittel für das Siloxanpräpolymer enthält, wobei die Komponente (C) in einem weiteren Behälter vorliegt.

3. Mehrkomponenten-Ortschaumsystem nach Anspruch 1 oder 2, **dadurch gekennzeichnet, dass** die Polyisocyanatkomponente (A) mindestens ein Polyisocyanat mit einem NCO-Gehalt von 5 bis 55 % und einer durchschnittlichen Anzahl von 2 bis 5 NCO-Gruppen pro Molekül umfasst.

4. Mehrkomponenten-Ortschaumsystem nach Anspruch 3, **dadurch gekennzeichnet, dass** die Polyisocyanatkomponente (A) ein Polyisocyanat auf der Grundlage von Methylendiphenyldiisocyanat und/oder polymere Homologe davon umfasst.

5. Mehrkomponenten-Ortschaumsystem nach Anspruch 4, **dadurch gekennzeichnet dass** die Polyisocyanatkomponente (A) ein Polyisocyanat auf der Grundlage von Methylendiphenyldiisocyanat und/oder polymere Homologe davon mit einem NCO-Gehalt von 31 % und durchschnittlich 2,7 NCO-Gruppen pro Molekül umfasst.

6. Mehrkomponenten-Ortschaumsystem nach mindestens einem der Ansprüche 1 bis 5, **dadurch gekennzeichnet, dass** die Polyolkomponente (B) mindestens ein Polyol mit einer OH-Zahl von 30 bis 1000 und einer durchschnittlichen OH-Funktionalität pro Molekül von 2 bis 7 umfasst.

7. Mehrkomponenten-Ortschaumsystem nach Anspruch 6, **dadurch gekennzeichnet, dass** die Polyolkomponente (B) mindestens ein Polyetherpolyol und/oder Polyesterpolyol mit einer OH-Zahl von 300 bis 1000 und einer durchschnittlichen OH-Funktionalität von 2 bis 7 und/oder mindestens ein Aminopolyetherpolyol und/oder ein Polyol auf der Grundlage von Phosphorsäureestern mit einer OH-Zahl von 30 bis 1000 und einer durchschnittlichen OH-Funktionalität pro Molekül von 2 bis 7 umfasst.

8. Mehrkomponenten-Ortschaumsystem nach mindestens einem der Ansprüche 1 bis 7, **dadurch gekennzeichnet, dass** als Komponente (C) ein Epoxydharz mit einem Epoxyäquivatentgewicht von 100 bis 500 g/Mol enthalten ist.

9. Mehrkomponenten-Ortschaumsystem nach Anspruch 8, **dadurch gekennzeichnet, dass** ein Epoxidharz auf der Grundlage von 70 % Bisphenol A und 30 % Bisphenol F enthalten ist.

10. Mehrkomponenten-Ortschaumsystem nach mindestens einem der Ansprüche 1 bis 9, **dadurch gekennzeichnet, dass** das Epoxidharz als Komponente (C) in einer Menge von 10 bis 50 Gew.-%, bezogen auf das Gewicht des Ortschaumsystems, enthalten ist

11. Mehrkomponenten-Ortschaumsystem nach mindestens einem der Ansprüche 1 bis 7, **dadurch gekennzeichnet, dass** als Komponente (C) ein Siloxanpräpolymer mit einer mittleren Molmasse von 200 g/Mol bis 10.000 g/mol und 2 bis 4 reaktiven Endgruppen enthält.

12. Mehrkomponenten-Ottschaumsystam nach mindestens einem der Ansprüche 1 bis 11, **dadurch gekennzeichnet, dass** die Kennzahl der Polyurethan-Reaktion im Bereich von 95 bis 165 liegt

13. Mehrkomponenten-Ortschaumsystem nach mindestens einem der Ansprüche 1 bis 12, **dadurch gekennzeichnet dass** die Polyolkomponente (B) Wasser in einer Menge die einen Polyurethanschaum mit einer Schaumdichte von 0,05 bis 0,5 g/cm$^3$ ergibt, einen oder mehrere-Katalysatoren für die Polyurethanbildungsreaktion, die Komponente (D) für die Bildung der weiteren Polymeren und gegebenenfalls einen Schaumzellenstabilisator enthält.

14. Mehrkomponenten-Ortschaumsystem nach Anspruch 13, **dadurch gekennzeichnet, dass** die Polyolkomponente (B) als Katalysatoren für die Polyurethanbildungsreaktion ein oder mehrere tertiäre Amine enthält.

15. Mehrkomponenten-Ortschaumsystem nach mindestens einem der Ansprüche 1 bis 14, **dadurch gekennzeichnet, dass** die Polyolkomponente (B) als Komponente (D) für die Bildung des weiteren Polymeren auf der Grundlage eines Epoxidharzes eine LewisSäure enthält

16. Mehrkomponenten-Ortschaumsystem nach mindestens einem der Ansprüche 1 bis 14, **dadurch gekennzeichnet, dass** die Polyolkomponente (B) als Komponente (D) für die Bildung des weiteren Polymeren auf der Grundlage eines Siloxanpräpolymers ein organooxysilan mit mindestens drei Methoxyendgruppen pro Molekül enthält.

17. Mehrkomponenten-Ortschaumsystem nach einem der Ansprüche 13 bis 16, **dadurch gekennzeichnet, dass** die Polyolkomponente (B) als Schaumzellenstabilisator ein Polysiloxan enthält.

18. MehrKomponenten-Oftschaumsystem nach mindestens einem der Ansprüche 1 bis 17, **dadurch gekennzeichnet,** das die Komponenten (A), (B), (C) und/oder (D) übliche Füllstoffe, Hilfsstoffe und/oder Additive in üblichen Mengen enthalten.

19. Mehrkomponenten-Ortschaumsystem nach Anspruch 18, **dadurch gekennzeichnet, dass** es 0 bis 40 Gew.- % eines Füllstoffs ausgewählt aus Sand, Kreide, Perlite, Russ oder Mischungen davon, 0 bis 2 Gew.- % eines oder mehrerer Farbstoffe und/oder 0 bis 40 Gew.- % eines brandhemmenden Additivs, jeweils bezogen auf das Gewicht des Ortschaumsystems, enthält

20. Mehrkomponenten-Ortschaumsystem nach mindestens einem der Ansprüche 1 bis 19, **dadurch gekennzeichnet, dass** die Behälter, weiche die Komponenten (A) bis (D) enthalten, über Zuführungsteitungen mit einer Abgabeeinrichtung mit Mischkopf verbunden sind, in dem die Komponenten vermischt werden.

21. Mehrkomponenten-Ortschaumsystem nach Anspruch 20, **dadurch gekennzeichnet, dass** die Abgabeeinrichtung einen Mischkopf in Form eines Mundstücks mit einen statischen Mischer aufweist.

22. Mehrkomponenten-Ortschaumsystem nach Anspruch 20 oder 21, **dadurch gekennzeichnet, dass** die Behälter mit Ausspresseinrtchtungen versehen sind, über welche die Komponenten (A) bis (D) in den Mischkopf der Abgabeeinrichtung ausgebracht werden können.

23. Mehrkomponenten-Ortschaumsystem nach Anspruch 22, **dadurch gekennzeichnet dass** als Ausspresseinrichtungen mechanische Presseinrichtungen und/oder Treibgase, die in den Komponenten (A) bis (D) und/oder in der Druckkammer einer Zweikammerkatrtusche enthalten sind, vorhanden sind.

24. Verwendung des Mehrkomponenten-Ortschaumsystems nach mindestens einem der Ansprüche 1 bis 23 zur Abdichtung von Durchbrüchen und/oder Durchführungen in Wänden und/oder Decken von Gebäuden.

25. Verfahren zur Abdichtung von Durchbrüchen und/oder Durchführungen in Wänden und/oder Decken von Gebäuden, **dadurch gekennzeichnet, dass** man das Mehrkomponenten-Ortschaumsystem nach mindestens einem der vorhergehenden
Ansprüche mit Hilfe der Abgabeeinrichtung mit Mischkopf, in dem die Komponenten vermischt werden, In den Durchbruch und/oder die Durchführung einbringt und aufschäumen und aushärten lässt.

**Claims**

1. Multi-component in-situ foam system for the production in situ of polyurethane foams for building purposes, with a polyisocyanate component (A) and a polyol component (B) which are presented in separate containers, [said system] including, besides the polyisocyanate component (A) and the polyol component (B), further components (C) and (D) in spatially separate form, said components forming when mixed together an interpenetrating polymeric network consisting of foamed polyurethane and at least one further polymer, **characterized in that** an epoxy resin and/or siloxane prepolymer is contained as component (C), and the polyol component (B) contains as component (D) for the formation of the further epoxy resin based polymer, a usual catalyst for the polymerization of the epoxy resin, or for the formation of the further siloxane prepolymer based polymer, a usual crosslinking agent for the siloxane prepolymer, the constituents of components (C) and (D) being contained in the containers for the polyisocyanate component (A) and polyol component (B) in such a manner that their reaction does not take place until the container contents have been mixed together.

2. Multi-component in-situ foam system for the production in situ of polyurethane foams for building purposes, with a polyisocyanate component (A) and a polyol component (B) which are presented in separate containers, [said system] including, besides the polyisocyanate component (A) and the polyol component (B), further components (C) and (D) in spatially separate form, said components forming when mixed together an interpenetrating polymeric network consisting of foamed polyurethane and at least one further polymer, **characterized in that** an epoxy resin and/or siloxane prepolymer is contained as component (C), and the polyol component (B) contains as component (D) for the formation of the further epoxy resin based polymer, a usual catalyst for the polymerization of the epoxy resin, or for the formation of the further siloxane prepolymer based polymer, a usual crosslinking agent for the siloxane prepolymer, the component (C) being presented in another container.

3. Multi-component in-situ foam system according to Claim 1 or Claim 2, **characterized in that** the polyisocyanate component (A) comprises at least one polyisocyanate with an NCO content of 5 to 55 % and an average number of 2 to 5 NCO groups per molecule.

4. Multi-component in-situ foam system according to Claim 3, **characterized in that** the polyisocyanate component (A) comprises a methylenediphenyldiisocyanate based polyisocyanate and/or polymeric homologues thereof.

5. Multi-component in-situ foam system according to Claim 4, **characterized in that** the polyisocyanate component (A) comprises a methylenediphenyldiisocyanate based polyisocyanate and/or polymeric homologues thereof with an NCO content of 31% and an average of 2.7 NCO groups per molecule.

6. Multi-component in-situ foam system according to at least one of Claims 1 to 5, **characterized in that** the polyol component (B) comprises at least one polyol with an OH number of 30 to 1000 and an average OH functionality per molecule of 2 to 7.

7. Multi-component in-situ foam system according to Claim 6, **characterized in that** the polyol component (B) comprises at least one polyether polyol and/or polyester polyol with an OH number of 300 to 1000 and an average OH functionality of 2 to 7 and/or at least one aminopolyether polyol and/or phosphoric acid esters based polyol with an OH number of 30 to 1000 and an average OH functionality per molecule of 2 to 7.

8. Multi-component in-situ foam system according to at least one of Claims 1 to 7, **characterized in that** an epoxy resin with an epoxy equivalent weight of 100 to 500 g/mol is contained as component (C).

9. Multi-component in-situ foam system according to Claim 8, **characterized in that** it contains an epoxy resin based on 70% bisphenol A and 30% bisphenol F.

10. Multi-component in-situ foam system according to at least one of Claims 1 to 9, **characterized in that** the epoxy resin as component (C) is contained in a proportion of 10 to 50 % by weight of the in-situ foam system.

11. Multi-component in-situ foam system according to at least one of Claims 1 to 7, **characterized in that** [it] contains as component (C) a siloxane prepolymer with a mean molar mass of 200 g/mol to 10,000 g/mol and 2 to 4 reactive terminal groups.

12. Multi-component in-situ foam system according to at least one of Claims 1 to 11, **characterized in that** the characteristic number of the polyurethane reaction lies in the range of 95 to 165.

13. Multi-component in-situ foam system according to at least one of Claims 1 to 12, **characterized in that** the polyol component (B) contains water in an amount yielding a polyurethane foam with a foam density of 0.05 to 0.5 g/cm$^3$, one or more catalysts for the polyurethane-forming reaction, the component (D) for the formation of the further polymers, and optionally a foam cell stabilizer.

14. Multi-component in-situ foam system according to Claim 13, **characterized in that** the polyol component (B) contains one or more tertiary amines as catalysts for the polyurethane-forming reaction.

15. Multi-component in-situ foam system according to at least one of Claims 1 to 14, **characterized in that** the polyol component (B) contains a Lewis acid as component (D) for the formation of the further epoxy resin based polymer.

16. Multi-component in-situ foam system according to at least one of Claims 1 to 14, **characterized in that** the polyol component (B) contains an organo-oxysilane with at least three methoxy terminal groups per molecule as component (D) for the formation of the further siloxane prepolymer based polymer.

17. Multi-component in-situ foam system according to at least one of Claims 13 to 16, **characterized in that** the polyol component (B) contains a polysiloxane as foam cell stabilizer.

18. Multi-component in-situ foam system according to at least one of Claims 1 to 17, **characterized in that** the components (A), (B), (C) and/or (D) contain usual quantities of usual fillers, auxiliary substances and/or additives.

19. Multi-component in-situ foam system according to Claim 18, **characterized in that** it contains 0 to 40 % by weight of a filler selected from sand, chalk, perlite or carbon black or mixtures thereof, 0 to 2 % by weight of one or more colorants and/or 0 to 40 % by weight of a fire-retardant additive, in each case as a percentage of the weight of the in-situ foam system

20. Multi-component in-situ foam system according to at least one of Claims 1 to 19, **characterized in that** the containers containing the components (A) to (D) are connected by feed lines to a dispensing device with a mixing head in which the components are mixed together.

21. Multi-component in-situ foam system according to Claim 20, **characterized in that** the dispensing device has a mixing head in the form of a mouthpiece with a static mixer.

22. Multi-component in-situ foam system according to Claim 20 or 21, **characterized in that** the containers are provided with discharge devices by means of which the components (A) to (D) can be propelled into the mixing head of the dispensing device.

23. Multi-component in-situ foam system according to Claim 22, **characterized in that** mechanical pressure devices and/or gas propellants contained in the components (A) to (D) and/or in the pressure chamber of a dual-chamber cartridge are provided as discharge devices.

24. Use of the multi-component in-situ foam system according to at least one of Claims 1 to 23 to seal breaches and/or lead-throughs in walls and/or ceilings of buildings.

25. Method for sealing breaches and/or lead-throughs in walls and/or ceilings of buildings, **characterized in that** by means of the dispensing device with its mixing head in which the components are mixed together, the multi-component in-situ foam system according to at least one of the preceding claims is introduced into the breach and/or lead-through and allowed to foam and harden.

## Revendications

1. Système moussant local à plusieurs composants pour la production de mousses de polyuréthane à des fins de construction sur site, comportant un composant polyisocyanate (A) et un composant polyol (B) qui se trouvent dans des conteneurs séparés, et qui contient outre le composant polyisocyanate (A) et le composant polyol (B), d'autres composants (C) et (D) sous forme séparée spatialement, lesdits composants formant lors du mélange un réseau polymère interpénétrant de polyuréthane moussant et d'au moins un autre polymère, **caractérisé en ce qu'**une résine époxyde et/ou un prépolymère de siloxane est contenu(e) en tant que composant (C) et le composant polyol (B) contient comme composant (D) pour la formation de l'autre polymère à base d'une résine époxyde, un catalyseur habituel pour la polymérisation de la résine époxyde ou contient pour la formation de l'autre polymère à base d'un prépolymère de siloxane, un agent de réticulation habituel du prépolymère de siloxane, les éléments constitutifs des composants (C) et (D) étant contenus de telle sorte, dans les conteneurs du composant polyisocyanate (A) et du composant polyol (B), que leur réaction s'effectue uniquement après mélange du contenu des conteneurs.

2. Système moussant local à plusieurs composants pour la production de mousses de polyuréthane à des fins de construction sur site, comportant un composant polyisocyanate (A) et un composant polyol (B) qui se trouvent dans des conteneurs séparés, et qui contient outre le composant polyisocyanate (A) et le composant polyol (B), d'autres composants (C) et (D) sous forme séparée spatialement, lesdits composants formant lors du mélange un réseau polymère interpénétrant de polyuréthane moussant et d'au moins un autre polymère, **caractérisé en ce qu'**une résine époxyde et/ou un prépolymère de siloxane est contenu(e) en tant que composant (C) et le composant polyol (B) contient comme composant (D) pour la formation de l'autre polymère à base d'une résine époxyde, un catalyseur habituel pour la polymérisation de la résine époxyde ou contient pour la formation de l'autre polymère à base d'un prépolymère de siloxane, un agent de réticulation habituel du prépolymère de siloxane, le composant (C) se trouvant dans un autre conteneur.

3. Système moussant local à plusieurs composants selon la revendication 1 ou 2, **caractérisé en ce que** le composant polyisocyanate (A) comprend au moins un polyisocyanate présentant une teneur en NCO de 5 à 55 % et un nombre moyen de 2 à 5 groupes de NCO par molécule.

4. Système moussant local à plusieurs composants selon la revendication 3, **caractérisé en ce que** le composant polyisocyanate (A) comprend un polyisocyanate à base de diisocyanate de méthylène-diphényle et/ou des homologues polymères de celui-ci.

5. Système moussant local à plusieurs composants selon la revendication 4, **caractérisé en ce que** le composant polyisocyanate (A) comprend un polyisocyanate à base de diisocyanate de méthylène-diphényle et/ou des homologues polymères de celui-ci, comportant une teneur en NCO de 31 % et en moyenne 2,7 groupes de NCO par molécule.

6. Système moussant local à plusieurs composants selon au moins l'une des revendications 1 à 5, **caractérisé en ce que** le composant polyol (B) comprend au moins un polyol présentant un indice OH de 30 à 1000 et une fonctionnalité OH moyenne par molécule de 2 à 7.

7. Système moussant local à plusieurs composants selon la revendication 6, **caractérisé en ce que** le composant polyol (B) comprend au moins un polyétherpolyol et/ou un polyesterpolyol présentant un indice OH de 300 à 1000 et une fonctionnalité OH moyenne de 2 à 7 et/ou au moins un aminopolyétherpolyol et/ou un polyol à base d'esters d'acide phosphorique présentant un indice OH de 30 à 1000 et une fonctionnalité OH moyenne par molécule de 2 à 7.

8. Système moussant local à plusieurs composants selon au moins l'une des revendications 1 à 7, **caractérisé en ce qu'**une résine époxyde présentant un poids équivalent d'époxy de 100 à 500 g/mole est contenue en tant que composant (C).

9. Système moussant local à plusieurs composants selon la revendication 8, **caractérisé en ce qu'**une résine époxyde à base de 70 % de bisphénol A et 30% de bisphénol F est contenue.

**10.** Système moussant local à plusieurs composants selon au moins l'une des revendications 1 à 9, **caractérisé en ce que** la résine époxyde est contenue comme composant (C) en une quantité de 10 à 50 % en poids par rapport au poids du système moussant local.

**11.** Système moussant local à plusieurs composants selon au moins l'une des revendications 1 à 7, **caractérisé en ce qu'**un prépolymère de siloxane présentant une masse molaire moyenne de 200 g/mole à 10 000 g/mole et 2 à 4 groupes terminaux réactifs est contenu en tant que composant (C).

**12.** Système moussant local à plusieurs composants selon au moins l'une des revendications 1 à 11, **caractérisé en ce que** l'indice de la réaction de polyuréthane est de l'ordre de 95 à 165.

**13.** Système moussant local à plusieurs composants selon au moins l'une des revendications 1 à 12, **caractérisé en ce que** le composant polyol (B) contient de l'eau en une quantité qui donne une mousse de polyuréthane présentant une densité de mousse de 0,05 à 0,5 g/cm$^3$, un ou plusieurs catalyseurs de la réaction de formation du polyuréthane, le composant (D) pour la formation des autres polymères et éventuellement, un stabilisant des cellules de mousse.

**14.** Système moussant local à plusieurs composants selon la revendication 13, **caractérisé en ce que** le composant polyol (B) contient comme catalyseur de la réaction de formation du polyuréthane, une ou plusieurs amines tertiaires.

**15.** Système moussant local à plusieurs composants selon au moins l'une des revendications 1 à 14, **caractérisé en ce que** le composant polyol (B) contient un acide de Lewis comme composant (D) pour la formation de l'autre polymère à base d'une résine époxyde.

**16.** Système moussant local à plusieurs composants selon au moins l'une des revendications 1 à 14, **caractérisé en ce que** le composant polyol (B) contient comme composant (D) un organo-oxysilane comportant au moins trois groupes terminaux méthoxyde par molécule pour la formation de l'autre polymère à base d'un prépolymère de siloxane.

**17.** Système moussant local à plusieurs composants selon au moins l'une des revendications 13 à 16, **caractérisé en ce que** le composant polyol (B) contient un polysiloxane comme stabilisant des cellules de mousse.

**18.** Système moussant local à plusieurs composants selon au moins l'une des revendications 1 à 17, **caractérisé en ce que** les composants (A), (B), (C) et/ou (D) contiennent des agents de charge, adjuvants et/ou additifs en quantités habituelles.

**19.** Système moussant local à plusieurs composants selon la revendication 18, **caractérisé en ce qu'**il contient 0 à 40 % en poids d'une substance de charge choisie parmi le sable, la craie, la perlite, le noir de carbone ou des mélanges de ceux-ci, 0 à 2 % en poids d'un ou plusieurs colorants et/ou 0 à 40 % en poids d'un additif ignifuge, respectivement, par rapport au poids du système moussant local.

**20.** Système moussant local à plusieurs composants selon au moins l'une des revendications 1 à 19, **caractérisé en ce que** les conteneurs qui contiennent les composants (A) à (D) sont reliés par le biais de conduites d'acheminement à un dispositif de distribution doté d'une tête de mélange dans laquelle les composants sont mélangés.

**21.** Système moussant local à plusieurs composants selon la revendication 20, **caractérisé en ce que** le dispositif de distribution présente une tête de mélange sous la forme d'un embout doté d'un mélangeur statique.

**22.** Système moussant local à plusieurs composants selon la revendication 20 ou 21, **caractérisé en ce que** les mélangeurs sont dotés de dispositifs d'extraction par lesquels les composants (A) à (D) peuvent être amenés dans la tête de mélange du dispositif de distribution.

**23.** Système moussant local à plusieurs composants selon la revendication 22, **caractérisé en ce que** des dispositifs de compression mécanique et/ou des gaz propulseurs sont présents en tant que dispositifs d'extraction, qui sont contenus dans les composants (A) à (D) et/ou dans les chambres de compression d'une cartouche à deux chambres.

**24.** Utilisation du système moussant local à plusieurs composants selon au moins l'une des revendications 1 à 23, pour étanchéifier des perforations et/ou des passages dans des murs et/ou des plafonds de bâtiments.

**25.** Procédé pour étanchéifier des perforations et/ou des passages dans des murs et/ou des plafonds de bâtiments, **caractérisé en ce que** l'on insère le système moussant local à plusieurs composants selon au moins l'une des revendications précédentes, à l'aide du dispositif de distribution comportant la tête de mélange dans laquelle les composants sont mélangés, dans la perforation et/ou le passage et on laisse mousser et durcir.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0230666 A
- EP 0753020 B
- US 4923934 A
- US 4212953 A